# EUROPEAN PATENT APPLICATION

(11) **EP 4 454 872 A1**
(43) Date of publication of application: **30.10.2024**
(21) Application number: 23315127.3
(22) Date of filing: 27.04.2023
(51) Int. Cl.: B29D 11/00, G02B 1/04

(54) **METHOD FOR IMPRINTING OPHTHALMIC LAMINATES AND RESIST COMPOSITION THEREFOR**

(71) Applicant: Essilor International, 94220 Charenton-Le-Pont (FR)
(72) Inventor: Ikizer, Burcin, Clinton 01510 (US); Tokarski, Zbigniew, Woodstock 06282 (US); Jallouli, Aref, Shrewsbury 01545 (US); French, Elliot, Charlton 01507 (US)
(74) Representative: Plasseraud IP

(57) **Abstract**

The present invention relates to a method of manufacturing an ophthalmic laminate (10) having a first support layer (11, 12), a resist layer (13) having micro or nanostructures (14) at a surface opposite the first support layer; the method comprising: forming on the first support layer, a partially cured resist layer (132) with a surface having micro or nanostructures through: depositing a resist composition (4) onto the first support layer to form a resist layer (41); imprinting the micro or nanostructures (131) onto the resist layer by applying onto the resist layer a stamp (5) provided with a negative image (51) of the micro or nanostructures and partially curing the resist layer until it is no longer tacky but acrylate bonds are still present therein; and removing the stamp.

It also relates to the ophthalmic laminate and a method of manufacturing an ophthalmic lens using the ophthalmic laminate.

## Description

### Technical field

The present invention pertains to the technical field of ophthalmic laminate and ophthalmic lens manufacturing. More specifically, the present invention relates to ophthalmic laminates and ophthalmic lenses made through imprinting and methods to manufacture such wafers and lenses to correct a vision impairment, slow down its progression, and improve specific lens distortions.

### Prior art

Ophthalmic lenses with micro or nanostructures on the lens surface or embedded within may be used to provide the ophthalmic lenses with improved properties. For example, ophthalmic lenses may be provided with embedded micro or nanostructures in the shape of micro or nanosized lenses. Such micro or nanosized lenses can be configured to bring more light to the centre of the eye, change the optical functionality of a portion of a lens (e.g. astigmatic region), or redirect a portion of the incoming light to different regions of the retina to treat or slow down the progression of eye-related vision conditions, such as myopia, in comparison with ophthalmic lenses without such features. It is known that when light is defocused at the periphery of the retina in short-sighted individuals, then this can decrease the progression of short-sightedness over time.

Nanoimprint lithography (NIL) is a form of UV Imprinting (UVI) which is used to fabricate micro or nanostructures on polymer surfaces by photocuring a coated resist layer while it is in contact with a patterning template such as a replica stamp, the microstructure's shape of which is the opposite image of the targeted micro or nanostructure shape on the polymer surface. The composition of the resist is typically comprised of thermoset or other energy-curable monomers or oligomers, cure initiators, processing aids, diluents, particulates, and optionally other reactive molecules.

The resist may be coated on a polymeric film, flexible foil, rigid metal plate or cylinder, quartz or silicon wafer, or other substrate. The patterning template is then brought into contact with the resist coated film. Subsequently, the resist is cured through either the substrate, or the template sides. The element through which curing is carried out must be transparent to the curing energy. Alternatively, the resist may be coated on the patterning template and the film or other substrate brought into contact with the coated patterning template. Subsequently, the resist is cured through either the transparent substrate or template sides. The patterning template may be in the form of a flat plate or shim, tiled welded shims, seamless cylinder or sleeve, circular drum, a concave or convex curved mould, or other patterned template..

The UV energy exposure causes photo-polymerization including cross-linking resulting in an increase of the resist modulus and causing the shape of the micro or nanostructures to be set in the resist. Subsequently, the cured resist layer is released from the patterning template. UV-light exposure (ion-beam, e-beam, or other high energy means) may be carried out through either a transparent template or a clear film or substrate. Transparent templates can be made of quartz glass, polydimethylsiloxane (PDMS) for example in the form of incompressible (firm, hard) or semi-compressible (soft) working stamps, or other durable material or blends with particle fillers (e.g., ZrO₂).

Non-transparent templates can be made by replicating the master template that was created through diamond turning, photolithography, or any other micro/nano-structuring means known in the art, in some cases through the creation of one or more replica templates. The master or replica template(s) may also be created by using a nickel-plating process on a metal substrate, such as stainless steel, brass, aluminium, or other suitable non-transparent process. This technique can be repeated, with the master or its replica templates, to change the image polarity, i.e. to create the opposite micro/nano-structure orientation, or to transfer the design onto a different supporting substrate.

Commercially available resists suitable for NIL are optimized for their reliability so that the chemical formulations produce consistent physical and mechanical properties, and for their bonding strength to the supporting substrates. Such supporting substrates usually have a hydrophobic surface of silicon or quartz that contact the photoresists. Those formulations are usually made of aromatic compounds or compounds having polar pendent groups; thus, they are coloured, not flexible not compatible with plastic materials like polycarbonate (PC). Their colours range from pale yellow to orange or red and are not necessarily formulated to be optically clear, transparent materials with a specific refractive index. Their lack of flexibility makes them brittle, and susceptible to crack under tension or compression. Polycarbonate is a common material for making ophthalmic lenses. Therefore, these drawbacks make these commercially available resist materials unsuitable for making ophthalmic lenses. They are also very expensive for large area coverage and defect-free imprinting.

Also, imprint layers may be difficult to bond to another layer for encapsulation purposes or their bonding strength may be too weak to resist wear.

Therefore, there is a need to develop a method and resist compositions that are suitable for imprinting micro or nanostructures on PC support and have sufficient bond strength to adhere to the PC substrate and the adhesive layer to enable encapsulation of the microstructured patterns within a multilayered film laminate or as a single layered film that is directly bonded to the lens substrate.

### Summary of the invention

Thus, one aim of the present invention is to overcome at least one of the drawbacks of the prior art. In particular, one aim of the present invention is to provide a resist formulation which is suitable for imprinting complex nano or microstructures on PC through NIL.

Thus, the present invention provides a method of manufacturing an ophthalmic laminate having a first support layer, a resist layer having micro or nanostructures at a surface opposite the first support layer. The method comprises forming on a first support layer, a partially cured resist layer with a surface having micro or nanostructures including: (i) depositing a resist composition onto the first support layer to form a resist layer, (ii) imprinting the micro or nanostructures onto the resist layer by applying onto the resist layer a stamp provided with a negative image of the micro or nanostructures and partially curing the resist layer until it is no longer tacky but acrylate bonds are still present therein, and (ii) removing the stamp.

Depositing the resist composition onto the first support layer may be carried out through precision coating such as spin-coating, wire-wound Meyer bar coating, knife coating, roll coating, gravure roller coating, or slot-die coating the resist composition onto the first support layer.

Depositing the resist composition may be through slot-die coating, the stamp may be a stamping drum and curing lay be carried out through the first support layer or the stamping drum.

Prior to forming the resist layer on the first support layer, the method may comprise activating the surface of the first support layer.

The first support layer may be a first thermoplastic layer, and the resist composition may comprise a crosslinking initiator and a mixture of polymerizable monomers or oligomers. The mixture may comprise 20-80 wt.% urethane triacrylate or urethane hexaacrylate, 3-30 wt.% triacrylate which is different from a urethane triacrylate and 3-30 wt.% diacrylate. Preferred mixtures comprise 50-70 wt.% urethane hexaacrylate, 15-25 wt.% triacrylate which is different from a urethane triacrylate, and 15-25 wt.% diacrylate. The weight percentage are based on the total weight of the polymerizable monomers or oligomers contained in the mixture.

Alternatively, the resist composition is any one of formulations F1 to F5.

Formulation F1 comprises 20 to 80 phm lower refractive index urethane acrylate(s), 10 to 50 phm mono or di-functional acrylate(s) different from lower refractive index urethane acrylates, 0 to 50 phm tri or higher functional acrylate(s) different from lower refractive index urethane acrylates, and 1 to 10 phm photoinitiator.

Formulation F2 comprises 20 to 80 phm higher refractive index urethane acrylate(s), 10 to 50 phm mono or di-functional acrylate(s) different from lower refractive index urethane acrylates, 0 to 50 phm tri or higher functional acrylate(s) different from lower refractive index urethane acrylates, 0 to 60 phm aromatic acrylate(s), and 1 to 10 phm photoinitiator.

Formulation F3 comprises 20 to 80 phm 9,9-bis(4-acryloyloxyethoxyphenyl)fluorene, 0 to 30 phm tri or higher functional acrylate(s) different from lower refractive index urethane acrylates, 0 to 60 phm aromatic acrylate(s); and 1 to 10 phm photoinitiator.

Formulation F4 comprises 0 to 70 phm 9,9-bis(4-acryloyloxyethoxyphenyl)fluorene, 0 to 70 phm aromatic acrylate(s), 30 to 100 phm brominated or chlorinated acrylate(s), and 1 to 10 wt.% photoinitiator.

Formulation F5 comprises 0 to 50 phm lower refractive index urethane acrylate(s), 0 to 70 phm mono or di-functional acrylate(s) different from lower refractive index urethane acrylates, 0 to 70 phm tri or higher functional acrylate(s) different from lower refractive index urethane acrylates, 30 to 100 phm fluorinated acrylate(s), and 1 to 10 phm photoinitiator.

Optionally the resist composition may comprise 20 to 60 wt.% of refractive index increasing nanoparticles; the total weight of the composition representing 100 wt.%.

In other cases, the first support layer may be a first primer layer made from depositing onto a first thermoplastic layer, a primer composition comprising a crosslinking initiator and a mixture of polymerizable monomers or oligomers. The mixture may comprise 20-80 wt.% urethane triacrylate or urethane hexaacrylate, 3-30 wt.% triacrylate which is different from a urethane triacrylate and 3-30 wt.% diacrylate. Preferred mixtures comprise 50-70 wt.% urethane hexaacrylate, 15-25 wt.% triacrylate which is different from a urethane triacrylate, and 15-25 wt.% diacrylate. The weight percentage are based on the total weight of the polymerizable monomers or oligomers contained in the mixture.

Alternatively, the primer composition may be formulation F1 or formulation F2 as defined above.

The method may further comprise providing a second support layer and a levelling layer between the resist layer and the second support layer.

Prior to providing the second support layer and the levelling layer, the method may comprise activating the surface of the second support layer.

Providing a levelling layer may comprise (i) spin-coating, wire-wound Meyer bar coating, knife coating, roll coating, gravure roller coating, or slot-die coating a levelling composition onto the second support layer to form a levelling film thereon, (ii) depositing the levelling composition onto the partially cured resist layer, (iii) bringing the levelling film in contact with the levelling composition deposited on the partially cured resist layer, (iv) fully curing the laminate to obtained the ophthalmic laminate.

The second support layer may be a thermoplastic layer.

The second support layer may be a second primer layer made from depositing onto a second thermoplastic layer, a composition as defined for the first primer layer.

The invention also provides a method of manufacturing an ophthalmic lens, which comprises providing an ophthalmic laminate with a first support layer and a resist layer having micro or nanostructures at a surface opposite the first support layer using the method as described above, and joining a substrate to the ophthalmic laminate.

The mould used in this method may comprise a convex die and a concave die. In such case, the method may comprise placing the ophthalmic laminate comprises placing the ophthalmic laminate against the concave die or the convex die.

The invention also provides an ophthalmic laminate comprising, stacked to one another in the following order, a first thermoplastic layer, a resist layer having micro or nanostructures at its free surface.

The ophthalmic laminate may further comprise a levelling layer and a second thermoplastic layer. The resist layer and the levelling layer form together micro or nanostructures at their interface.

The resist layer may be made from a resist composition as described above.

The ophthalmic laminate may further comprise a primer layer between the first thermoplastic layer and the resist layer, or between the adhesive layer and the second thermoplastic layer. The primer layer may be made of a primer composition as described above.

The ophthalmic laminate provided by the invention survives subsequent processing steps such as: thermoforming, pressure-forming, blow-forming, adhesive lamination, thermoplastic injection moulding, thermoset casting, lens cribbing, surfacing, edging, frame mounting, hard multilayer coating, etc. It is also a high quality, cosmetic defect-free ophthalmic lens. Thus, it is essentially free from environmental stress cracking, delamination, low transmission, haze, colour change (yellow index), etc.

### Drawings

Further aim, features and advantages will become more apparent in the following detailed description with reference to the following drawings:
**FIG. 1** is a schematic view of an exemplary ophthalmic laminate according to the invention before shaping and having a first support layer and a resist layer.
**FIG. 2** is a schematic view of another exemplary ophthalmic laminate according to the invention before shaping and having in addition to the layers illustrated in **FIG. 1** a levelling layer.
**FIG. 3** is a schematic view of another exemplary ophthalmic laminate according to the invention before shaping and having a first support layer, a resist layer, an adhesive layer and a second support layer.
**FIG. 4** is a schematic view of another exemplary ophthalmic laminate according to the invention before shaping and having in addition to the layers illustrated in **FIG. 1** a first primer layer.
**FIG. 5** is a schematic view of another exemplary ophthalmic laminate according to the invention before shaping and having in addition to the layers illustrated in **FIG. 3** a first primer layer and a second primer layer.
**FIG. 6** is a schematic view of the exemplary ophthalmic laminate of **FIG. 1** after shaping yielding a structured wafer.
**FIG. 7** is a schematic view of the exemplary ophthalmic laminate of **FIG. 2** after shaping yielding an encapsulated structured wafer.
**FIG. 8** is a schematic view of the exemplary ophthalmic laminate of **FIG. 3** after shaping yielding an encapsulated structured wafer.
**FIG. 9** is a schematic view of a sunwear lens according to the invention with an encapsulated structured wafer of **FIG. 7****.**
**FIG. 10** is a schematic view of a sunwear lens according to the invention with an encapsulated structured wafer of **FIG. 8****.**
**FIG. 11** is a schematic view of another sunwear lens according to the invention with an encapsulated structured wafer of **FIG. 8****.**
**FIG. 12** is a schematic view of another sunwear lens according to the invention.
**FIG. 13** schematically illustrates imprinting micro or nanostructures into a partially cured resist layer according to an exemplary implementation of the method of the invention.
**FIG. 14** schematically illustrates manufacturing the unshaped ophthalmic laminate of **FIG. 3****.**
**FIG. 15** schematically illustrates thermoplastic injection-overmoulding of a substrate onto a structured wafer.
**FIG. 16** schematically illustrates thermoset casting of a substrate onto a structured wafer.
**FIG. 17** schematically illustrates continuous roll-to-roll imprinting of a resist on a film using a transparent template stamp fixed on a transparent printing drum with curing through the transparent printing drum and transparent template stamp.
**FIG. 18** schematically illustrates continuous roll-to-roll imprinting of a resist on a transparent film using a template stamp fixed on a printing drum with curing through the transparent film.

### Detailed description of the invention

Unless mentioned otherwise, all viscosity values are obtained at 25.6°C on a Brookfield viscometer (Brookfield Ametek Small sample adapter SC4-18 spindle with sample amount: 6.7 mL).

### Ophthalmic laminate

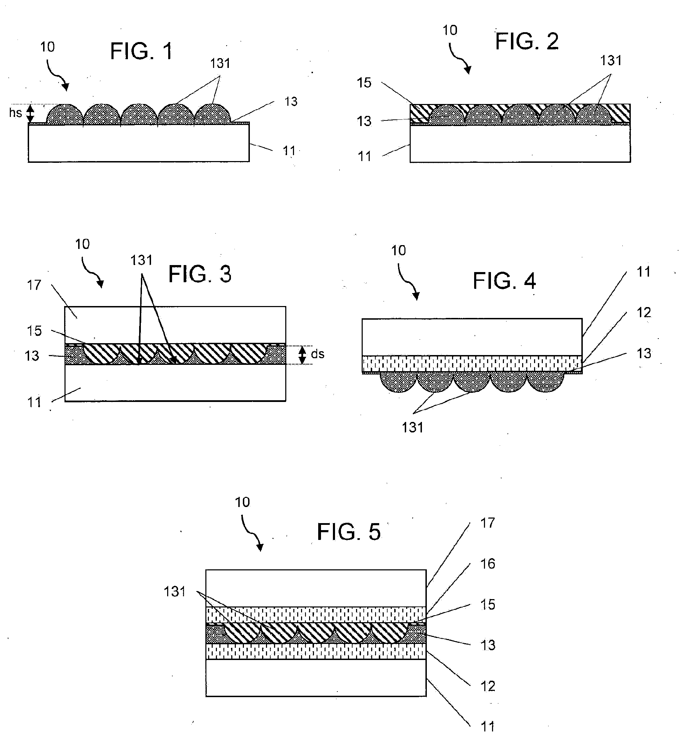

Ophthalmic laminates according to the invention will now be described with reference to **FIG. 1** to **4****.**

This ophthalmic laminate **10** comprises, stacked to one another in the following order a first thermoplastic layer **11** and a resist layer **13** having micro or nanostructures **131** at on its face opposite the first thermoplastic layer **11** as illustrated in **FIG. 1****.**

In another embodiment, the ophthalmic laminate **10** further comprises, stacked on the resist layer **13,** a refractive index levelling layer **15** (here-after levelling layer) as illustrated in **FIG. 2****.** In such case, the levelling layer **15** has micro or nanostructures which are the negative image of the micro or nanostructures **131** of the resist layer **13.** The levelling layer **15** helps tune the refractive index of the overall ophthalmic laminate **10** to the desired overall refractive index according to the refractive index of the resist layer **13**.

In addition to the levelling layer **15,** the ophthalmic laminate **10** may further comprise a second thermoplastic layer **17** on the levelling layer **15** as illustrated in **FIG. 3****.**

In general, the number of reactive or functional precursors that can be used in the ophthalmic field is limited: e.g. epoxy, acrylate, or vinyl monomers with single or multifunctional reactive groups including rings, mixtures of such reactive monomers, diluents, oligomers, pre-polymers, or polymers. These compounds are available to have all the properties required to form an optically functional ophthalmic laminate.

Examples of usable epoxy monomers are especially UV curing such as Delo^{®} Katiobond^{®} 45952, Delo^{®} Katiobond^{®} 4670, Delo^{®} Katiobond^{®} DF698, Delo^{®} Katiobond^{®} EG6133, Delo^{®} Katiobond^{®} GE680, and Delo^{®} Katiobond^{®} KB552.

The resist layer **13** may be made of a resist composition comprising a crosslinking initiator and a mixture of polymerizable monomers or oligomers. The mixture comprises 20-80 wt. % urethane triacrylate or urethane hexaacrylate, 3-30 wt.% triacrylate which is different from a urethane triacrylate and 3-30 wt.% diacrylate. These weight percentages are based on the total weight of the polymerizable monomers or oligomers contained in the mixture.

Such resist composition makes it possible to replicate the pattern of the patterning template of working stamp with high replication fidelity, low shrinkage, and in particular it can be completely released from the patterning template or working stamp without any resist material left on the latter. Clean release from the template or stamp **5** ensures durability of this latter as cleaning is made easier. Also, it has setting rate from uncured to softly cured commensurate for the curing process. It has a high bond strength to the first thermoplastic layer **11** and, when provided, the levelling layer **15,** have high cohesive strength. In addition, it is non-brittle and malleable during thermoforming of the ophthalmic laminate into a low or high diopter base curve wafer.

Further, such resist composition is inexpensive.

In one example, the mixture may comprise 50-70 wt.% urethane hexaacrylate, 15-25 wt.% triacrylate which is different from a urethane triacrylate, and 15-25 wt.% diacrylate. These weight percentage are based on the total weight of the polymerizable monomers or oligomers contained in the mixture.

The polymerizable monomers or oligomers may be at least three compounds chosen from the group consisting in:
- difunctional urethane methacrylate monomer (e.g. CN 1969, Sartomer; Visiomer HEMATMDI, Lintech International/Evonik),
- 3,3,5-trimethylcyclohexyl methacrylate (e.g. SR421A, Sartomer),
- pentaerythritol tetraacrylate (e.g. SR295, Sartomer)
- monofunctional isorbornyl methacrylate (e.g. Visiomer Terra IBOMA, Lintech International/Evonik),
- aliphatic urethane diacrylate (e.g. Photomer 6024, IGM),
- hexafunctional aliphatic urethane acrylate oligomer (e.g Photomer 6690, IGM),
- difunctional aliphatic urethane acrylate (Photomer 6891, IGM),
- trifunctional aliphatic urethane acrylate (Photomer 6892, IGM),
- hexamethylene diacrylate,
- propanediyl diacrylate,
- o-phenylphenol ethylene oxide acrylate (e.g. Miramer M1142, Miwon),
- bisfluorene diacrylate (e.g. Miramer HR6042, Miwon),
- phenol (ethylene oxide) acrylate (e.g. Miramer M140, Miwon),
- trimethylolpropane triacrylate,
- hexanediol diacrylate ,
- tripropylene glycol diacrylate and
- triethylene glycol diacrylate.

Preferably, the polymerizable monomers or oligomers are photopolymerizable monomers or oligomers, thus making the resist composition a photoresist composition and the resist layer **13** a photoresist layer.

The crosslinking initiator may make up 0.5-5 wt.% of the resist composition.

Preferably, the crosslinking initiator is a photo-initiator. In such case, the crosslinking initiator may be at least one of Omnirad 4265, ,2-hydroxy-2-methyl-1 -phenylpropanone, diphenyl(2,4,6-trimethylbenzoyl)phosphine oxide, 3-hydroxy-3-phenylbutan-2-one, ethyl-phenyl(2,4,6-trimethylbenzoyl)phosphinate, 1-hydroxycyclohexylphenyl ketone, and 1-(4-isopropylphenyl)-2-hydroxy-2-methylpropane-1-one.

The resist composition may comprise a fluorinated acrylate which makes it possible to shift the refractive index of the resist composition. Usually, adding fluorinated acrylate decreases the refractive index.

Other examples of preferred resist compositions are summed up in the following table (amounts are expression in phm, i.e. parts by 100 parts by weight of monomer):

| | F1 | F2 | F3 | F4 | F5 |
|---|---|---|---|---|---|
| Lower refractive index urethane acrylate(s) | 20-80 | ------- | ------- | ------- | 0-50 |
| Higher refractive index urethane acrylate(s) | ------- | 20-80 | ------- | ------- | ------- |
| Mono or di-functional acrylate(s) | 10-50 | 10-50 | ------- | ------- | 0-70 |
| Tri or higher functional acrylate(s) | 0-50 | 0-50 | 0-30 | ------- | 0-70 |
| 9,9-bis(4-acryloyloxyethoxyphenyl)fluorene | ------- | ------- | 20-80 | 0-70 | ------- |
| Aromatic acrylate(s) | ------- | 0-60 | 0-60 | 0-70 | ------- |
| Brominated or chlorinated acrylate(s) | ------- | ------- | ------- | 30-100 | ------- |
| Fluorinated acrylate(s) | ------- | ------- | ------- | ------- | 30-100 |
| Photoinitiator | 1-10 | 1-10 | 1-10 | 1-10 | 1-10 |

The lower refractive index urethane acrylates may be chosen from the list consisting of: Photomer 6690; Photomer 6892; Photomer 6008; Photomer 6010; Photomer 6019; Photomer 6184; Photomer 6625; Photomer 6720; Ebecryl 1290; Ebecryl 1291; Ebecryl 8301-R; Ebecryl 264; Ebecryl 266; Ebecryl 8405; Ebecryl 8465; Ebecryl 8605; Ebecryl 8606; Ebecyl 8701; Ebecryl 8702; Miramer PU320; Miramer PU340; Miramer PU3450; Miramer PU390; Miramer PU622; Miramer MU9800; Miramer U3600; Miramer U3304; Sartomer CN929; Sartomer CN968; Sartomer CN989; Sartomer CN9006; Sartomer CN9010; Sartomer CN9013; Sartomer CN9012; Sartomer CN9026; Sartomer CN9029; Sartomer CN9062; Sartomer CN968; and Sartomer CN968.

The higher refractive index urethane acrylates may be chosen from the list consisting of: Miramer HR3000; Miramer HR3200; Miramer HR3700; Miramer HR3800; Miramer HR4000; and Miramer PU2900.

The mono or di-functional acrylate (where acrylate could also be methacrylate) may be chosen from the list consisting of: 1,6-hexanediol diacrylate; 1,10-decanediol diacrylate; tetrahydrofurfuryl acrylate; 1,4-butanediol diacrylate; diethylene glycol diacrylate; tricyclodecane dimethanol diacrylate; 3,3,5-trimethylcyclohexyl acrylate; cyclohexane dimethanol diacrylate; isobornyl acrylate; caprolactone acrylate; cyclic trimethylolpropane formal acrylate; butyl acrylate; and pentyl acrylate.

The tri or higher functional acrylates (where acrylate could also be methacrylate) may be chosen from the list consisting of: trimethylolpropane triacrylate; trimethylolpropane (EO)ₙ triacrylate; trimethylolpropane (PO)ₙ triacrylate; tris(2-hydroxyethyl)isocyanurate triacrylate; pentaerythritol tetraacrylate; pentaerythritol (EO)ₙ tetraacrylate; ditrimethylolpropane tetraacrylate; di(pentaerythritol) pentaacrylate; and dipentaerythritol hexaacrylate.

The aromatic acrylates (where acrylate could also be methacrylate) may be chosen from the list consisting of: 2-phenylphenoxyethyl acrylate; 2-phenoxyethyl acrylate; alpha-naphthyl acrylate; beta-naphthyl acrylate; 2-phenylethyl acrylate; diphenylmethyl acrylate; phenyl acrylate; and bisphenol A (EO)ₙ diacrylate;

The brominated or chlorinated acrylates (where acrylate could also be methacrylate) may be chosen from the list consisting of: pentabromobenzyl acrylate; pentabromophenyl acrylate; phenyl alpha-bromoacrylate; p-bromophenyl acrylate; 2,3-dibromopropyl acrylate; methyl alpha-bromoacrylate; pentachlorophenyl acrylate; and o-chlorodiphenylmethyl acrylate.

The fluorinated acrylates (where acrylate could also be methacrylate) may be chosen from the list consisting of: pentadecafluorooctyl acrylate; tetrafluoro-3-(heptafluoropropoxy)propyl acrylate; tetrafluoro-3-(pentafluoroethoxy)propyl acrylate; undecafluorohexyl acrylate; nonafluoropentyl acrylate; tetrafluoro-3-(trifluoromethoxy)propyl acrylate; heptafluorobutyl acrylate; octafluoropentyl acrylate; pentafluoropropyl acrylate; 2-heptafluorobutoxy)ethyl acrylate; 2,2,3,4,4,4-hexafluorobutyl acrylate; trifluoroethyl acrylate; 2-(1,1,2,2-tetrafluoroethoxy)ethyl acrylate; trifluoroisopropyl acrylate; 2,2,2-trifluoro-1-methylethyl acrylate; 2-trifluoroethoxyethyl acrylate; and trifluoroethyl acrylate.

The photoinitiator may be Omnirad 4265.

The resist composition preferably has a viscosity of 430 to 640 cPs, preferably of 480 to 590 cPs, still preferably of 510 to 560 cPs.

The resist composition preferably has a glass transition temperature (Tg) of 75 to 120°C, preferably of 85 to 110°C, preferably still of 90 to 100°C.

In some cases, the levelling layer **15 is** the last layer of the ophthalmic laminate **10** provided to encapsulate the micro or nanostructures **131.** The levelling layer 15 may also act as a protective encapsulation layer when the micro or nanostructures of this laminate structure face toward the exterior surface of a lens.

In other cases, the levelling layer **15** is an adhesive layer made of an adhesive composition which has the same definition as the resist composition for the resist layer **13** and is used to bond to the second support layer **17,** including the preferred compositions F1 to F5. If the adhesive composition is chosen amongst F1 to F4, it may further comprise index shifting nanoparticles such as ZrO₂ particles. The resist composition used for the adhesive layer **15** is, however, different from the one used for the resist layer **13.**

The adhesive composition preferably has a setting rate from uncured to softly cured which commensurate for the drying or curing process. It also has a high bond strength to the second thermoplastic layer **17** and to the resist layer **13.** It exhibits high cohesive strength and is non-brittle and malleable during thermoforming of the laminate into a low or high base curve wafer.

The adhesive composition used for the adhesive layer **15** is preferably sufficiently fluid to fill-in the created pattern of micro or nanostructures of the resist layer enabling a high fill fidelity. For example, the adhesive has a viscosity of 630 to 950 cPs, preferably 710 to 870 cPs, still preferably 750 to 830 cPs.

In this viscosity example, the adhesive composition comprises refractive index shifting nanoparticles to produce a higher refractive index and viscosity as compared to the resist and allow the resist composition to replicate easily the pattern during the imprinting process and to converge light.

In other cases without any refractive index shifting nanoparticles, the viscosity is preferably of 430 to 640 cPs, preferably 480 to 590 cPs, still preferably 505 to 560 cPs. The adhesive composition preferably has a glass transition temperature (Tg) of 75 to 120°C, preferably of 85 to 110°C, preferably still of 90 to 100°C.

At least one of the resist layer **13** and levelling layer **15** may comprise refractive index shifting nanoparticles making it possible to adjust the refractive index according to the optical power of the micro or nanostructures. Usually, adding such nanoparticles increases the refractive index.

Adding the index shifting nanoparticles makes it possible to finer tune the viscosity of the resist composition or the levelling composition so that they can completely fill the pattern template, partially cure and completely release from the template within the patterning process. Clean release from the template or stamp **5** ensures durability of this latter as cleaning is made easier.

These nanoparticles may be chosen from the group consisting of oxides, sulfides, selenides, tellurides, halides, carbides, arsenides, antimonides, nitrides, phosphides, carbonates, carboxylates, phosphates, sulfates, silicates, titanates, zirconates, aluminates, stannates, strontiums, galliums, titanates, plumbates and their combinations. Preferred refractive index shifting nanoparticles are zirconium dioxide (ZrO₂) particles, titanium dioxide (TiO₂) particles, hafnium dioxide (HfO₂) particles, and tungsten trioxide (WO₃) particles.

These refractive index shifting nanoparticles may be surface treated with a dispersing agent prior use or anti-flocculants may be added into the resist or levelling composition to ensure that the refractive index shifting nanoparticles are homogeneously dispersed in the composition and are homogeneously dispensed during the manufacturing process of the ophthalmic laminate **10.**

The refractive index shifting nanoparticles may make up 20-75 wt.% of the total weight of the resist or levelling composition.

The resist composition and/or the levelling composition are preferably mostly made of non-volatile components, e.g. non-volatile components makes up at least 90 wt.% of the composition. Such feature a) prevents a dense surface skin layer from forming during solvent evaporation, b) limits layer shrinkage and void (free space) creation during solvent removal (drying) and subsequent curing process leading to less change in the shape and dimensions of the replicated micro or nanostructures, c) limits or eliminates the surface tension related defects that are associated with contaminates (mitigated by the addition of wetting agents), and d) deliberately terminates polymer chain propagation to control curing degree.

Each of the micro or nanostructures **131** of the resist layer **13** may be independently a refractive optical element (such as an aspherical lens, a spherical lens, a toric lens or a prismatic lens), a diffractive optical element (such as a Fresnel lens), a diffusive element, a scattering element or an element with any other optical function. Preferably, all the micro or nanostructures **131** are of the same type. These optical elements create, micro or nanoscale lenslets. The micro or nanoscale lenslets may be either raised **(****FIG. 1, FIG. 2** and **FIG. 4****)** or recessed **(****FIG. 3** and **FIG. 5****)** relative to the fiducial background plane.

For example, the micro or nanostructures **131** may each be a partially spherical protrusion or a partially spherical recess. When the levelling layer **15** is provided, this latter presents micro or nanostructures which are negative image of the micro or nanostructures **131** of the resist layer **13,** thus, each one is respectively a partially spherical recess or a partially spherical protrusion.

Preferably, the refractive index of the resist layer **13** and the refract index of the levelling layer **15** are different. For example, the refractive index of the resist layer **13** may be greater than the refractive index of the levelling layer **15.** In another example, the refractive index of the resist layer **13** may be lower than the refractive index of the levelling layer **15.** As an example, the convergent or divergent properties of incident light passing through micro or nanoscale structures in the form of spherical microlenses are summed up in the following table.

| | | spherical microlenses on the resist layer | |
|---|---|---|---|
| | | raised | recessed |
| Refractive index relationships | nᵣₑₛᵢₛₜ > n_{levelling} | convergent | divergent |
| | nᵣₑₛᵢₛₜ < n_{levelling} | divergent | convergent |

Preferably, the difference in refractive indexes between the resist layer **13** and the levelling layer **15** is lower than 0.80, for example between 0.05 and 0.15. This is the case, for example, when one of the resist layer **13** and the levelling layer **15** comprises aliphatic urethane oligomers such as IGM Photomer 6892 and/or Photomer 6690, and the other layer comprises sulphur-containing aromatic urethane oligomers such as Miwon's Miramer HR3200. For a constant optical power and microlens cord diameter, the microlens radius and its sagitti height (hs, cf. **FIG. 1****)** above or sagitti depth **(ds,** cf. **FIG. 3****)** below the lens fiducial plane will increase with a decrease in the difference in refractive indexes. This means that the lowest profile microlens patterns (i.e., smallest sagitti height or depth) can be used in the design when difference in refractive indexes (delta RI) has the highest values.

The micro or nanostructures **131** are provided according to a predefined pattern. The pattern may be a regular tiling with regular polygonals, with each micro or nanostructure **131** in the middle of a regular polygonals. The regular tiling may be a triangular tiling, a square tiling, a hexagonal tiling, or in a radial tiling. Preferably, for example in the case of hemispheres, each thereof touches its neighbours.

In some embodiments, the ophthalmic laminate **10** comprising a first primer layer **12** between the first thermoplastic layer **11** and the resist layer **13** as illustrated in **FIG. 4****.**

In yet some other embodiments, the ophthalmic laminate **10** further comprises a second primer layer **16** between the levelling layer **15** and the second thermoplastic layer **17** as illustrated in **FIG. 5****.**

However, it must be understood also that the description encompasses the cases where one among the first primer layer **12** and the second primer layer **16** is absent.

The first primer layer **12** and the second primer layer **16** are made each of a resist composition as described above, in particular the preferred resist compositions F1 and F2. The first primer layer **12** and second primer layer **16** can be made of resist compositions different to each other. The resist composition used for the first and second primer layer **12, 16** is different from that of the adhesive layer **15.The** first and second primer layers **12, 16** may be made of a composition consisting of a reactive diluent and urethane acrylate.

In this embodiment, the difference in refractive indexes between the resist layer **13** and the adhesive levelling **15** may be 0.05 or higher.

Preferably, the difference in refractive indexes between the resist layer**13** and the levelling layer **15** is 0.05 up to 0.15 and the ophthalmic laminate **10** comprises at least one of the first and second primer layers **12, 16.** This is the case, for example, when one of the resist layer **13** and the levelling layer **15** consists of aliphatic urethane acrylate oligomer as the main reactive component and the other layer consists of a bisfluorene acrylate oligomer, such as Miwon's Miramer HR6042, with an optional component to increase its refractive index such as ZrO₂ particles, TiO₂ particles or brominated acrylates.

Alternatively, the difference in refractive indexes between the resist layer **13** and the levelling layer **15** is higher than 0.15 and the ophthalmic laminate **10** comprises both first and second primer layers **12, 16.** This is the case, for example, when one of the resist layer **13** and the levelling layer **15** (the layer with lower refractive index) is composed of a mixture of aliphatic acrylates, with optional refractive index lowering components such as fluorinated acrylates, and the other layer (the layer with higher refractive index) is mainly composed of bisfluorene acrylate oligomer, with optional refractive index increasing components such as ZrO₂ particles, TiO₂ particles or brominated acrylates.

The following table sums up the preferred combinations of first primer, resist, adhesive and second primer layers.

| Layers | | Primer **12** | Resist **13** | Adhesive / Levelling **15** | Primer **16** |
|---|---|---|---|---|---|
| Convergent Recessed | Option 1 | Not required | F1 | F1 + ZrO₂ | Not Required |
| | Δn = +0.07 | | | | |
| | Option 2 | Not required | F1 | F2 + optional ZrO₂ | Not required |
| | Δn = +0.07 to +0.15 | | | | |
| Or | Option 3 | Not Required | F1 | F3 + optional ZrO₂ | F1 or F2 |
| Divergent Raised | Δn = +0.07 to +0.15 | | | | |
| | Option 4 | F1 or F2 | F5 | F4 + optional ZrO₂ | F1 or F2 |
| | Δn > +0.15 | | | | |
| Divergent Recessed | Option 5 | Not Required | F1 + ZrO₂ | F1 | Not required |
| | Δn = -0.07 | | | | |
| | Option 6 | Not required | F2 + optional ZrO₂ | F1 | Not required |
| | Δn = -0.07 to -0.15 | | | | |
| Or | Option 7 | F1 or F2 | F3 + optional ZrO₂ | F1 | Not Required |
| Convergent Raised | Δn = -0.07 to -0.15 | | | | |
| | Option 8 | F1 or F2 | F4 + optional ZrO₂ | F5 | F1 or F2 |
| | Δn < -0.15 | | | | |

| | | | | | |
|---|---|---|---|---|---|
| Δn = refractive index of levelling layer - refractive index of resist ZrO2 = Zirconium or titanium oxide nanoparticles solution (20 to 60% of total composition by weight) | | | | | |

In all embodiments, the first and second thermoplastic layer **11, 17** may be made of a material chosen from the group consisting of polycarbonates (PC), polyethylene terephthalates (PET), cellulose triacetates (TAC), cyclic olefin copolymers (COC), and poly(methyl methacrylate) (PMMA) and other acrylate polymers (AP), and polyamides (PA, Nylon). The materials of the first and second thermoplastic layer **11, 17** need not be the same. For example, the first thermoplastic layer **11** may be made of PC and the second thermoplastic layer **17** may be made of Nylon. Thus, the combination of materials for the first and second thermoplastic layer **11, 17** may be chosen from the following set, (first thermoplastic layer **11;** second thermoplastic layer **17):** {(PC; PC), (PC, PET), (PC, TAC), (PC, COC), (PC, PMMA), (PC, AP), (PC, PA), (PET, PC), (PET, PET), (PET, TAC), (PET, COC), (PET, PMMA), (PET, AP), (PET, PA), (TAC, PC), (TAC, PET), (TAC, TAC), (TAC, COC), (TAC, PMMA), (TAC, AP), (TAC, PA), (COC, PC), (COC, PET), (COC, TAC), (COC, COC), (COC, PMMA), (COC, AP), (COC, PA), (PMMA, PC), (PMMA, PET), (PMMA, TAC), (PMMA, COC), (PMMA, PMMA), (PMMA, AP), (PMMA, PA), (AP, PC), (AP, PET), (AP, TAC), (AP, COC), (AP, PMMA), (AP, AP), (AP, PA), (PA, PC), (PA, PET), (PA, TAC), (PA, COC), (PA, PMMA), (PA, AP), (PA, PA), }.

### Structured wafer and ophthalmic patch

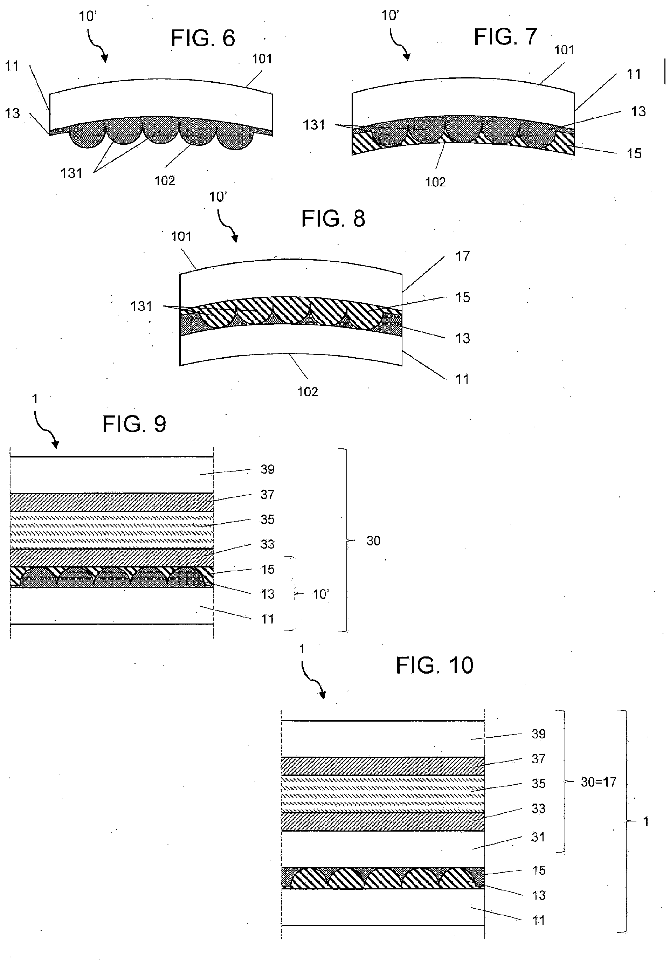

The ophthalmic laminate **10** may be formed to become a(n encapsulated) structured wafer **10'** which comprises a concave side **102** and a convex side **101** (see **FIG. 6, FIG. 7** and **FIG. 8****).** The resist layer **13** may be closer to the concave side than the first support layer **11** which is closer to the convex side than the resist layer **13 (****FIG. 6** and **FIG. 7****).** Alternatively, the resist layer **13** is farther from the concave side than the first support layer **11** which is farther from the convex side than the resist layer **13 (****FIG. 8****).**
The ophthalmic laminate **10** or the shaped structured wafer **10'** can be provided with an adhesive on the free surface of the first thermoplastic layer **11** or the second thermoplastic layer **17** to form an ophthalmic patch. The adhesive may be a pressure sensitive adhesive (PSA), a hot-melt adhesive (HMA) or other adhesives such as water-based ones, solvent-based one, or even solventless ones. The ophthalmic patch can then be adhered to the surface of an existing ophthalmic lens.

### Ophthalmic lens

The ophthalmic laminate **10** described above can be used to manufacture an ophthalmic lens **1.**

Such an ophthalmic lens **1** typically comprises a substrate **20** and an ophthalmic laminate **10** cut and shaped into a structured wafer **10'.** The structured wafer **10'** may be overmoulded to the substrate **20,** i.e. the structured wafer **10'** is situated on one side of the ophthalmic lens **1.** For example, the ophthalmic lens **1** comprises a concave face and a convex face. The structured wafer **10'** may be on the concave face or on the convex face. The ophthalmic laminate may be encapsulated within the substrate **20** or each face of the structured wafer **10'** is overm.oulded to a substrate thereby embedding the structured wafer **10'** within the lens substrate **20.**

The substrate **20** may be made of thermoplastic, thermoset, or mineral glass materials.

The ophthalmic lens **1** may have different configurations according to the eyewear use it is intended to.

One example of such applications is in the field of sunwear spectacles.

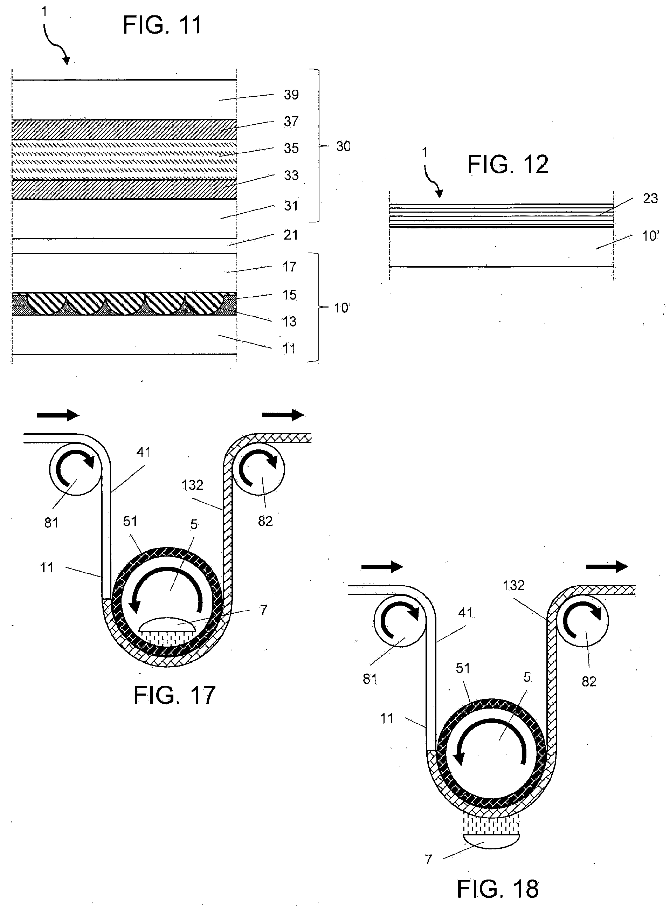

In a first example, an structured wafer **10'** with the following structure may be used to make an ophthalmic lens **1** having a polarizing element **30.** The structured wafer **10'** comprises in the following order: a first polycarbonate layer **11,** a resist layer **13** having micro or nanostructures **131,** and a levelling layer **15.** In a first variant **(****FIG. 9****),** the structured wafer **10'** is integrated in the polarizing element **30.** The polarizing element **30** comprises in the following order: the structured wafer **10',** a first adhesive layer **33,** a polyvinyl alcohol polarising layer **35,** a second adhesive layer **37** and a second polycarbonate layer **39.** The levelling layer **15** of the structured wafer **10'** is thus assembled onto the first adhesive layer **33** of the polarizing element **30.** In a second variant **(****FIG. 10****),** the polarizing element **30** instead of having the structured wafer **10'** as first layer, this latter is replaced with a first polycarbonate layer **31.** The whole polarizing element **30** may then be used as the second support layer **17** of the structured wafer **10'** for example by laminating the polarizing element onto the levelling layer **15** which is chosen to be an adhesive layer. In a third variant **(****FIG. 11****),** a chemical adhesive, pressure sensitive adhesive or a hot melt adhesive **21** may be used to bond the structured wafer **10'** directly to the surface of a polarized ophthalmic lens **30.** In a fourth variant **(****FIG. 11****),** a chemical adhesive, pressure sensitive adhesive or a hot melt adhesive may be used to bond the polarizing element **30** directly to the surface of an ophthalmic lens **1** having the structured wafer **10'.**

In a second example in the field of sunwear spectacles, the microstructured ophthalmic lens **1** is submerged into a heated tank containing a dye solution (dye bath) to produce tinted colour lens. In a variant, one of the film layers 11 or 17 of the ophthalmic laminate 10 has been pre-tinted or fabricated with colourants before becoming part of the ophthalmic laminate **10**. In another variant, at least one of the resist, adhesive, or levelling layers incorporates a coloured dye or pigment.

In a third example **(****FIG. 12****),** the microstructured ophthalmic lens **1** is a photochromic lens comprising photochromic multilayer coatings **23** on the surface of an structured wafer **10'** on an ophthalmic substrate. In a variant, the polyvinyl alcohol polarising layer **35** is replaced with a photochromic plastic layer (e.g., photochromic thermoplastic polyurethane) to produce a photochromic lens.

In a fourth example, the ophthalmic lens **1** is an electrochromic element lens comprising an structured wafer **10'** bonded to a lens embedded with a mineral glass-based or plastic-based electrochromic element.

Still another example of such applications is smart eyewear. In such case, one of virtual reality lens, augmented reality lens, and mixed reality lens comprises an structured wafer **10'** to prevent at least one of the following conditions: myopia, eyestrain, and other eye-related conditions. In another case, the smart eyewear may incorporate sensors on the eyeglass frame or through the lens to monitor, record, or report, health related information such as blood pressure, diabetes, stroke, heart disease, seizers, and other medical related conditions.

### Ophthalmic laminate manufacturing methods

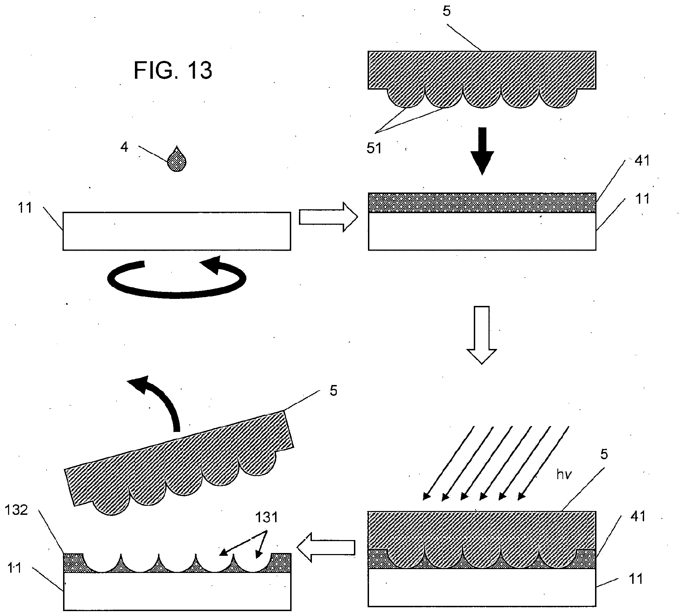

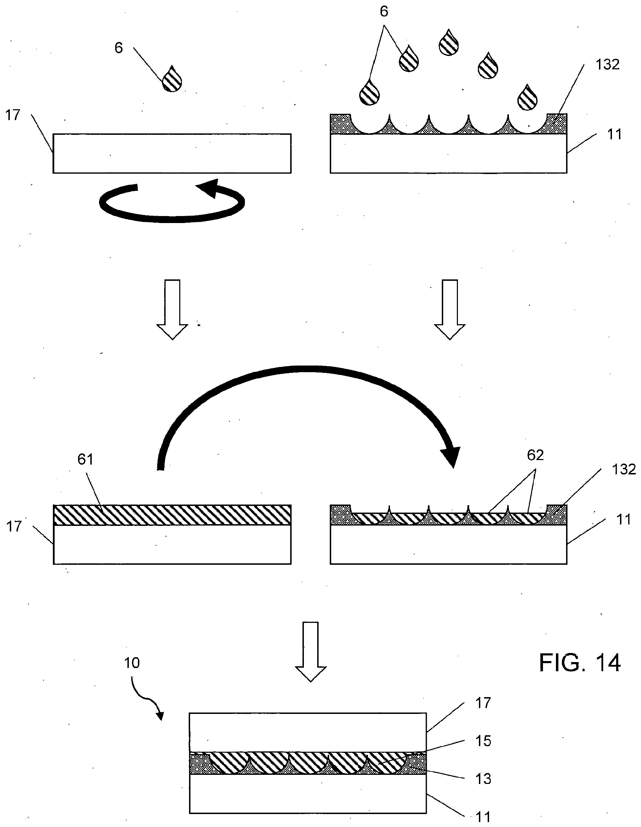

A first method of manufacturing an ophthalmic laminate, and in particular the ophthalmic laminate comprising, stacked to one another in the following order a first thermoplastic layer **11,** a resist layer **13,** and optionally a levelling layer **15** and a second thermoplastic layer **17,** according to the invention will be described hereafter with reference to **FIG. 13** and **FIG. 14****.**

This method comprises forming on a first thermoplastic layer **11** a partially cured resist layer **132** with a surface having micro or nanostructures **131** to form a polycarbonate/resist layer assembly. The method may also comprise providing a levelling layer **15** between the partially cured resist layer **132** and optionally a second thermoplastic layer **17** to form a laminate.

Forming the partially cured resist layer comprises depositing the resist composition **4** as described above onto the first thermoplastic layer **11** to form an uncured resist layer **41,** imprinting the micro or nanostructures **131** onto the uncured resist layer **41** by applying onto the uncured resist layer a stamp **5** provided with a negative image **51** of the micro or nanostructures and partially curing the uncured resist layer **41** until it is no longer tacky but acrylate bonds are still present in the partially cured resist layer, and removing the stamp **5,** thus leaving a partially cured resist layer **132** on the first thermoplastic layer **11.**

When an uncured resist is cured until it is no longer tacky but still has unreacted acrylate bonds therein, the resist can be said to be "softly cured". In the context of the present disclosure, this means for example that the micro or nanostructures **131** have gained their final shape; when the stamp **5** is removed, they retain their shape. For a layer of softly cured resist, this means that it will not lose its shape when moved or touched. Yet, in this state, the micro or nanostructures **131** or the softly cured resist layer can still react to the material of another layer because of the remaining acrylate bonds.

The degree of curing can range from 80 to 99% of the theoretically fully cured resist, preferably 95 to 99%. This is determined by measuring a Infrared spectrum of the partially cured resist and using the peaks of the polymer and monomer corresponding to skeletal stretching vibrations of C=C bonds in their aromatic rings. Undercuring has the risk to lead to micro or nanostructure deformation during release of the resist layer **13** form the stamp **5,** while overcuring can impede bond strength between the resist layer **13** and the levelling layer **15.** Clean release from the template or stamp **5** ensures durability of the latter as cleaning is made easier.

Curing depends on the nature of the resit composition **4.** When the resist composition **4** is a photoresist composition, curing is carried out by radiation for example with UV light energy. When the resist composition **4** is a thermoset resist composition, curing is carried out by heat energy, optionally using a curing initiator such as a peroxide initiator.

Depositing the resist composition **4** onto the first thermoplastic layer **11** may be carried out through spin-coating, wire-wound Meyer bar coating, knife coating, roll coating, gravure roller coating, slot-die coating either in a sheet sized batch process or in a roll-to-roll film web continuous process.

Because the properties of the stamp **5** may require use of flexible material, usually having a low durability, the stamp **5** may be manufactured from a master template. The master template is acting as a mould for shaping the stamp **5** and is made of a more durable material such as metal, glass, silicon or delicate photolithographic layers deposited on the quartz or silicon material. The same master template can be used for a stamp **5** with raised macro or nanostructures and a stamp with recessed macro or nanostructures through the use of an intermediate template; in particular because manufacturing of a master stamp is expensive. The intermediate template can actually be a so-called first-generation stamp and the stamp obtained from this intermediate template can be a so-called second-generation stamp. In general, it is possible to use a n^{th} generation stamp, i.e. with n-1 intermediate templates between the master template and the stamp **5**. The integer n has no limit and can be 1, 2, 3, 4, 5, 6, 7, 8, 9, 10, etc.

As an example, a single master stamp is made using precision tooling method (e.g., diamond turning, photolithography, etc.) to capture the finer details of the micro- or nano-structured pattern using a material best suited for the tooling method. Several first-generation stamp replicas of the master stamp would be made to either invert the structure pattern and/or to use a more process friendly stamp materials (e.g., from a brittle to a more durable stamp material). Numerous second-generation working stamps would be made from the first-generation stamp at a lower cost using the same or different stamp materials as the first-generation stamp so that these working stamps can be replaced more frequently in a high quantity production setting, e.g. inexpensive working stamps may be replaced once a day, week, or month depending on the production process, stamp material, resist chemistry, contamination level, handling wear, etc.

The below table summarises the types of macro or nanostructures on the stamp **5** for:
- the cases without any intermediate template or an even number of intermediate templates (labelled "2k"); and
- the case with an odd number of intermediate templates (labelled "2k+1").

The resist layer **13** always has macro or nanostructures **131** which are the negative images of the macro or nanostructures of the stamp **5.**

| Master template | Stamp | |
|---|---|---|
| | 2k | 2k+1 |
| raised | recessed | raised |
| recessed | raised | recessed |

The material used to make the stamp **5** maybe a silicone-based elastomer, for example resulting in a polydimethylsiloxane (PDMS) such as a PDMS with tensile strength of 4 to 6 MPa, preferably 4.5 to 5.5 MPa, still preferably 5.0 to 5.4 MPa, and a shore hardness of 35 to 55 at 20°C, preferably 40 to 50, still preferably 42 to 46. One example of such PDMS is Sylgard^{®} 184.

Manufacturing the stamp **5** may thus comprise pouring the silicone-based elastomer into the master template, curing the silicon-based elastomer until fully solidified and releasing the stamp **5** from the master template. Alternatively, manufacturing the stamp **5** may comprise nickel deposition on the master template to form the 2k^{th} intermediate stamp and/or a second nickel deposition on the 2k intermediate stamp to form the 2k+1^{th} replicated stamp with greater durability.

The master template can be prepared by a variety of methods which include subtractive methods and additive methods relative to the base support material. Among the subtractive methods, the following can be mentioned: diamond turning, laser ablation, and electro-etching of metal, glass or other suitable support material. Among the additive methods, the following can be mentioned: 3D Printing, Photolithography, or Jetting on a quartz or silicon wafer support material.

The choice of method for manufacturing the master template typically depends on the micro or nanostructures to be formed thereon. But all methods generally begin by using a starting template with a surface which is highly polished to very low macro-contour and micro-roughness values before any further processes.

In principle, subtractive methods would be better suited for creating recessed micro or nanostructures, while additive methods would be better suited for creating both raised micro or nanostructures. This is because removing all the background material and leaving behind raised microstructures is in general more time-consuming than carving only the recessed areas. In addition, the carved background (non-raised areas) is no longer in a highly polished state because subtractive tooling marks are left on the surface. In contrast, the effort and precision required by additive methods to build up and/or layer only the material necessary to create the raised micro or nanostructures is expected to be faster and easier than to build up and/or layer the entire non-recessed background and leave behind the recessed micro or nanostructures. In addition, the background (non-recessed areas) is no longer in a highly polished state because additive tooling marks are left on the surface. In greyscale photolighography, positive or negative photoresists may be used to amass multilayers of the raised structures while washing away the unwanted areas after each masking step.

Providing a levelling layer **15** may comprise spin-coating an adhesive composition **6** onto the second thermoplastic layer **17.** to form an adhesive film **61** thereon, depositing the adhesive composition **6** onto the partially cured resist layer **132,** bringing the adhesive film **61** in contact with the adhesive **62** deposited on the partially cured resist layer **132** to form an uncured laminate, and curing the uncured laminate to obtain the laminate.

Alternatively, providing a levelling layer **15** may comprise wet coating an adhesive composition **6** onto the second thermoplastic layer **17** to form an adhesive film **61,** for example through wire-wound Meyer bar coating, knife coating, roll coating, gravure roller coating, slot-die coating, curtain coating, or drip coating into a nipped roller lamination process; the adhesive film **61** thus forming a continuous wet-bond bead. Alternatively still, providing a levelling layer **15** may comprise applying an adhesive composition **6** onto the second thermoplastic layer **17** through any adhesive application process, such as a metered drip delivery, to form a continuous wet-bond adhesive bead in a nipped roller lamination process. In both cases, providing a levelling layer **15** further comprises bringing the adhesive bead in contact with the partially cured resist layer **132** at the wet-bond nipped roller continuous roll-to-roll web process to form an uncured laminate, and curing the uncured laminate to obtain the ophthalmic laminate **10.** Alternatively, the optically clear adhesive solution may be coated on a carrier film material using any of the precision coating methods described above, partially or fully dried to form an adhesive layer (2 microns to 50 microns) that is then transferred to the second thermoplastic layer 17 before coming into contact with the partially cure microstructures 131 on the first thermoplastic layer 11 in a nipped roller lamination process.

The method may further comprise, prior to forming the resist layer **41** on the first thermoplastic layer **11,** activating the surface of the first thermoplastic layer **11.** Activating the surface of the first thermoplastic layer **11** can be carried out through plasma treatment, corona treatment, or chemical treatment of the surface of the first thermoplastic layer **11** or still treating the surface of the first thermoplastic layer **11** with a silane coupling agent.

The method may further comprise, prior to providing the levelling layer **15,** activating the surface of the second thermoplastic layer **17.** Activating the surface of the second thermoplastic layer **17** can be carried out through plasma treatment, corona treatment, or chemical treatment of the surface of the second thermoplastic layer **17** or still treating the surface of the second thermoplastic layer **17** with a silane coupling agent.

Another method of manufacturing an ophthalmic laminate aims at improving adhesion of the resist layer and the adhesive layer with a specific refractive index that would not directly bond to the thermoplastic layer. This method utilizes a thin primer layer between the resist layer and the thermoplastic layer or between the leveling layer and the thermoplastic layer. This is usually necessary when using materials where the refractive index difference between the resist and levelling layer is higher than 0.07.

In the following, the description will be made with reference to an ophthalmic laminate comprising, stacked to one another in the following order a first thermoplastic layer **11,** a first primer layer **12,** a resist layer **13**,-a levelling layer **15,** a second primer layer **16** and a second thermoplastic layer **17,** will be described hereafter. However, it must be understood also that the description encompasses the cases:
- where the first primer layer **12** is absent (then all the steps relating to the formation of this layer **12** must be disregarded and in the description of the other steps must be read by replacing the first primer layer **12** with the first thermoplastic layer **11);** and
- where the second primer layer **16** is absent (then all the steps relating to the formation of this layer **16** must be disregarded and in the description of the other steps must be read by replacing the second primer layer **16 with** the second thermoplastic layer **17).**

The method comprises forming a first primer layer **12** on a first thermoplastic layer **11,** forming on the first primer layer **12** a resist layer **13** with a surface having micro or nanostructures to form a laminate. The method may further comprise forming a second primer layer **16** on a second thermoplastic layer **17,** and providing a levelling layer **15** between the resist layer **13** and the second primer layer **16.**

In this method, forming the first primer layer **12** comprises depositing a primer composition as described above onto the first thermoplastic layer **11** to form an uncured primer layer, partially curing the uncured primer layer until it is no longer tacky but acrylate bonds are still present in the partially cured resist layer.

Depositing the resist composition onto the first primer layer may be carried out by spin-coating, wire-wound Meyer bar coating, knife coating, roll coating, gravure roller coating, slot-die coating either in a sheet sized batch process or in a roll-to-roll film web continuous process.

Forming the resist layer **13** may comprise depositing a resist composition onto the first primer layer **12** to form an uncured resist layer, imprinting the micro or nanostructures onto the uncured resist layer by applying onto the uncured resist layer a stamp provided with a negative image of the micro or nanostructures and partially curing the uncured resist layer until it is no longer tacky but acrylate bonds are still present in the partially cured resist layer, and removing the stamp.

The stamp may be manufactured as described above.

Curing depends on the nature of the resist composition 4 as described above.

Providing the levelling layer **15** may comprise depositing an adhesive composition onto the second primer layer **16** to form an adhesive film thereon, depositing the adhesive composition onto the partially cured resist layer, bringing the adhesive film in contact with the adhesive deposited on the partially cured resist layer to form an uncured laminate, and fully curing the uncured laminate to obtain the laminate.

Depositing an adhesive composition onto the second primer layer **16** may be carried out by any precision coating techniques such as spin-coating, wire-wound Meyer bar coating, knife coating, roll coating, gravure roller coating, slot-die coating either in a sheet sized batch process or in a roll-to-roll film web continuous process.

This method may further comprise, prior to forming the first primer layer **12** on the first thermoplastic layer **11,** activating the surface of the first thermoplastic layer **11.** Activating the surface of the first thermoplastic layer **11** can be carried out through plasma treatment, corona treatment, or chemical treatment of the surface of the first thermoplastic layer **11** or still treating the surface of the first thermoplastic layer **11** with a silane coupling agent.

This method may further comprise, prior to providing the second primer layer **16,** activating the surface of the second thermoplastic layer **17.** Activating the surface of the second thermoplastic layer **17** can be carried out through plasma treatment, corona treatment, or chemical treatment of the surface of the second thermoplastic layer **17** or still treating the surface of the second thermoplastic layer **17** with a silane coupling agent.

In both methods, imprinting can be carried out using a continuous method such as a roll-to-roll method as illustrated in Fig. 17 and 18.

In the roll-to-roll method, the stamp **5** may be in the form of a drum, a cylindrical roller, a shim mounted on a drum or roller, or a sleeve mounted on a drum or roller (it will be referred hereafter to a drum, but it encompasses all these options). The surface of the drum is provided with, as the stamping template **51,** the negative image of the micro or nanostructures to be formed on the thermoplastic layer, such as the first thermoplastic layer **11.** In the following, the description will refer to the first thermoplastic layer **11** and the resist layer **13.** However, the same description can be made for the second thermoplastic layer **17** and the levelling layer **15.**

The first thermoplastic layer **11** is fed to make contact with the drum by the action of two transport rollers **81, 82.** Both transport rollers rotate in a direction opposite to the rotation direction of the drum that is in contact with the opposite surface of the first thermoplastic layer **11.** The first thermoplastic layer **11** bears a coated uncured resist layer **41** facing away from the transport rollers **81, 82** and towards the drum and both are provided in the form of a continuous web. Optionally, a first primer layer **12** lies between the first thermoplastic layer **11** and the uncured resist layer **41.**

When the uncured resist layer **41** contacts the stamping template **51,** micro or nanostructures are formed in the uncured resist layer **41**. The pressure of the stamping template **51** is maintained by the drum on the uncured resist layer **41** for a predetermined period of time during which the uncured resist layer **41** is softly cured through curing energy **7.** The nature of curing depends on the resist composition **4** as described above.

The stamping template **51** may be transparent. In such case, soft curing can be carried out through the stamping template **51** (Fig. 17).

The first thermoplastic layer **11** may be transparent. In such case, soft curing can be carried out through the first thermoplastic layer **11** (Fig. 18).

After soft curing, the assembly of first thermoplastic layer **11** and softly cured resist layer **132,** with optionally a first primer layer **12** in between, leaves the drum and is driven away by the transport rollers **81, 82.**

Both methods may further comprise shaping the laminate. For example, shaping the laminate may comprise at least one of die-cutting the laminate and thermoforming the ophthalmic laminate to obtain the 3D-shaped, structured wafer **10'.**

### Ophthalmic lens manufacturing method

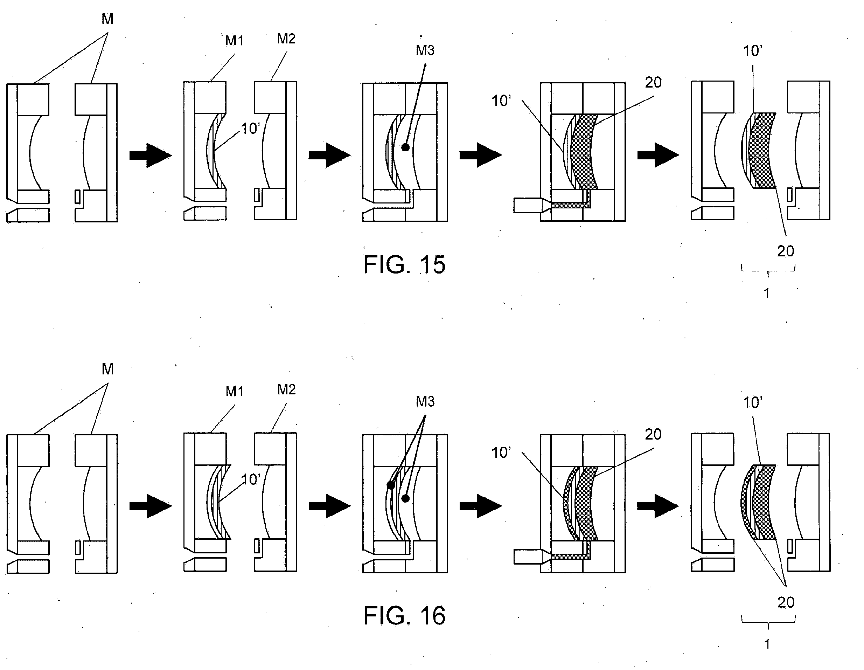

A method of manufacturing an ophthalmic lens according to the invention will be described hereafter with reference to **FIG. 15** and **16****.**

This method comprises manufacturing a structured wafer **10'** using one of the methods described hereabove, placing the structured wafer **10'** into an ophthalmic lens mould **M,** and forming a substrate **20** inside the lens mould to obtain the ophthalmic lens.

The mould may comprise a concave side **M1 and** a convex side **M2.** In such case, placing the structured wafer **10'** may comprise placing its convex side **101** against the concave side **M1** of the mould (see **FIG. 15****).**

Alternatively, the mould comprises a concave side **M1** and a convex side **M2.** In such case, placing the structured wafer **10'** comprises placing its concave side **102** against the convex side **M2** of the mould.

Alternatively, placing the structured wafer **10'** may comprise placing it between both sides **M1, M2** of the mould so that neither the convex side **101** nor the concave side **102** of the structured wafer **10'** touches the concave side **M1** or the convex side **M2** of the mould. In such case, the structured wafer **10'** can be closer to the concave side **M1** (see **FIG. 16****)** or the convex side **M2** of the mould. Preferably, the distance of the side of the structured wafer **10'** closest to one of the sides of the mould **M** to that side of the mould **M** is 1 mm or less.

The substrate **20** may be made from a thermoplastic composition. In such case, forming the substrate **20** is preferably through injection-overmoulding, during which the thermoplastic composition used fills the void **M3** between the structured wafer **10'** and the mould **M**. With injection-moulding, placement of the structured wafer **10'** is preferably against on side **M1** or **M2** of the mould **M.**

The thermoplastic substrate **20** may be made of polycarbonate (PC), cyclic olefin copolymer (COC), poly(methyl methacrylate) (PMMA) and other acrylate polymers, polyamides (PA, Nylon) or other thermoplastic injection moulding materials used in the ophthalmic industry.

In some instances, it might be necessary to promote adhesion of the structured wafer **10'** to the injected thermoplastic. This can be the case when the structured wafer **10'** has neither any adhesion layer **15** nor any second support layer **17** (see **FIG. 6****).** Thus prior to injection-overmoulding with the thermoplastic substrate **20,** the method can comprise promoting adhesion on the partially cured resist layer **13** and/or the first support layer **11** of the structured wafer **10'** (or of the ophthalmic laminate **10** before forming it into the structured wafer **10'),** for example, through corona treatment, plasma treatment or chemical treatment.

Other methods may be used to manufacture such an ophthalmic lens. For example, the structured wafer **10'** may be incorporated on the surface **(****FIG. 15****)** or in the bulk **(****FIG. 16****)** of a thermoset cast ophthalmic lens. Thus, the substrate **20** may be made of thermosetting materials, such as poly(allyl diglycol carbonate (e.g., CR-39^{™} from PPR) and urethane-based pre-polymer (e.g., Trivex^{™} from PPG). Other suitable materials are the MR^{™} Series from Mitsui Chemicals, or other thermoset casting materials used in the ophthalmic industry. Accordingly, forming the substrate **20** may comprise casting a thermoset composition in the mould **M.** Since thermoset compositions are more fluid than thermoplastic, it can flow more easily into all free space of the mould **M** even if the structured wafer **10'** is not placed against one of the side **M1** or **M2** of the mould. Thus, the embodiment depicted in **FIG. 16** is more suitable for forming the substrate **20** through casting a thermoset composition.

Another example is to provide the structured wafer **10'** with an adhesive on the free surface of the first thermoplastic layer **11** or the second thermoplastic layer **17.** The adhesive may be a pressure sensitive adhesive (PSA), a hot-melt adhesive (HMA) or other adhesives such as water-based ones, solvent-based one or event solventless ones. The ophthalmic laminate **10** can then be adhered to the surface of an existing ophthalmic lens. Alternatively, a UV curable and/or heat curable fluid optical adhesive can be used to bond the structured wafer **10'** to the surface of an existing thermoplastic or thermoset ophthalmic lens.

### Examples

### Example 1

Example 1 illustrates an example of a method of manufacturing the ophthalmic laminate **10** without primer layers.

First a stamp **5** is manufactured by pouring a Sylgard^{®} 184 mixture into a micro or nanostructured master template having a positive image of the desired micro or nanostructures **131** for the resist layer **13.** The Sylgard^{®} 184 mixture is then cured until fully solidified and the stamp **5** having a negative image of the desired micro or nanostructures **131** is released therefrom.

Then, an acrylate resist layer **41** was spin-coated on top of a surface of a first polycarbonate layer **11** made of a first composition, the surface was previously plasma treated. The stamp **5** is then applied onto the resist layer **41** and this latter was softly cured. In this softly cured state, the resist layer **41** still has unreacted and unbound functional acrylate (C=C) groups at the interface that will improve its bond strength with the subsequent applied adhesive layer. At this time, the patterned resist layer **41** was released from the stamp **5.**

A layer of acrylate adhesive **61** was then spin-coated on top of a surface of a second polycarbonate layer **17** made of a second composition, the surface was previously plasma treated. Acrylate adhesive **6** was also added onto the surface of the softly cured micro or nanostructured resist layer **132.** The layer of acrylate adhesive **61** was then applied against the resist layer **13** with the acrylate adhesive between a steel roller and a hard rubber nipped pinch roller lamination tool. The obtained laminate was then exposed to UV radiation to fully cure the resist layer **13** and the acrylate adhesive forming an acrylate adhesive layer **15.** After die-cutting and shaping the fully cured laminate **10,** an structured wafer **10'** was obtained.

Subsequently, an ophthalmic lens mould **M** having a concave side **M1** and a convex side **M2** is used in an injection moulding method to obtain an ophthalmic lens **1.** To do so, the structured wafer **10'** was inserted against the concave side **M1** and both sides **M1, M2** of the mould were brought together forming a mould cavity **M3.** A molten polycarbonate was injected into the mould cavity **M3** to overmould an ophthalmic substrate **20** onto the structured wafer **10',** thus form the ophthalmic lens **1.**

### Example 2

Example 2 illustrates another example of a method of manufacturing the ophthalmic laminate **10** without primer layers.

First a stamping template in the form of a thin sheet is manufactured by pouring a Sylgard^{®} 184 mixture into a micro or nanostructured master template having a positive image of the desired micro or nanostructures for the resist layer. The Sylgard^{®} 184 mixture is then cured until fully solidified and the stamping template having a negative image of the desired micro or nanostructures is released therefrom and applied on the lateral surface of a drum with the micro or nanostructures facing outwards, thus forming a stamp (or stamping drum).

In this method, a first and a second polycarbonate layers, each in the shape of a continuous sheet, are used. The first and second polycarbonate layers are unrolled from respective polycarbonate roll of film. This enables continuously manufacturing a plurality of ophthalmic laminates. The continuous sheets of first and second polycarbonate layers are conveyed through subsequent stations.

First polycarbonate layer: in a first station, a surface thereof is plasma-treated or chemically treated beforehand with a silane coupling agent. In a second station, an acrylate resist layer is slot-die coated on top of the treated surface. In a third station, the acrylate resist layer meets the surface of the stamping drum. During this contact, the stamping template is applied onto the acrylate resist layer and maintained while the stamping drum makes large wrap angle, about a full 180° rotation, bringing the stacked acrylate resist layer and portion of the stamping template to a radiation curing station where UV radiation is emitted through the first polycarbonate layer to the acrylate resist layer to softly cure the latter. In this softly cured state, the resist layer still has unreacted and unbound functional acrylate (C=C) groups at the interface that will improve its bond strength with the subsequent applied adhesive layer. The patterned resist layer was then released from the stamping drum as the continuous sheet with the softly cured micro or nanostructured resist layer thereon is conveyed to a station where acrylate adhesive is deposited as a metered drip bead-coating onto the surface of the softly cured micro or nanostructured resist layer and then conveyed to the wet-bond nipped pinch roller lamination station.

Second polycarbonate layer: in a first station, a surface thereof is plasma-treated or chemically treated beforehand with a silane coupling agent. In a second station, a layer of acrylate adhesive may be slot-die coated on top of the treated surface. Then the continuous sheet with the acrylate adhesive layer is conveyed to the wet-bond nipped pinch roller lamination station.

In the lamination stacking station, the continuous sheet with the acrylate adhesive layer is applied on top of the continuous sheet with the softly cured micro or nanostructured resist layer so that the acrylate adhesive layer contacts the softly cured micro or nanostructured resist layer. The stacked assembly is then fully cured in a subsequent station.

After curing, ophthalmic laminates are cut out of the stacked assembly, shaped and incorporated in an ophthalmic lens in the same manner as in example 1.

### Example 3

Example 3 illustrates the method of manufacturing the ophthalmic laminate with primer layers.

First a stamp **5** is manufactured by pouring a Sylgard^{®} 184 mixture into a micro or nanostructured master template having a positive image of the desired micro or nanostructures **131** for the resist layer **13.** The Sylgard^{®} 184 mixture is then cured until fully solidified and the stamp **5** having a negative image of the desired micro or nanostructures **131** is released therefrom.

Then, a first thin primer layer **12** was spin-coated onto a first polycarbonate layer **11** of a first polycarbonate composition, and a second thin primer layer **16** was spin-coated onto a second polycarbonate layer **17** of a second polycarbonate composition. The primer layers **12, 16** were softly UV cured.

An acrylate resist layer **41** was subsequently spin-coated on top of the softly cured first primer layer **12.** The macro or microstructures are imprinted into the resist layer **41** by means of a flexible conformable working stamp **5** and the resist was softly cured and the stamp **5** is removed.

An acrylate adhesive layer **61** was spin-coated on top of plasma treated surface of the second primer layer **16.** Additional acrylate adhesive **6** was added as metered drip bead-coating between the softly cured resist layer and the acrylate adhesive layer **61** between a steel roller and a hard rubber nipped pinch roller lamination tool. The resulting laminate was exposed to UV radiation to fully cure all the softly cured layers **12, 13, 16** and the uncured layer **15.** The fully cured laminate is then die-cut and formed (shaped), thus yielding an structured wafer **10'.**

Subsequently, an ophthalmic lens mould **M** having a concave side **M1** and a convex side **M2** is used in an injection moulding method to obtain an ophthalmic lens **1. To** do so, the structured wafer **10'** was inserted against the concave side **M1** and both sides **M1, M2** of the mould were brought together forming a mould cavity **M3.** A molten polycarbonate was injected into the mould cavity **M3** to overmould an ophthalmic substrate **20** onto the structured wafer **10',** thus form the ophthalmic lens **1.**

### Example 4

In this example, a composition comprising 55 wt.% aliphatic urethane hexaacrylate, 20 wt.% trimethylolpropane triacrylate, 20 wt.% hexanediol diacrylate and 5 wt.% Omnirad 4265 as crosslinking initiator, was used for the resist layer **13.** Its glass transition temperature is 98°C.

The composition used for the adhesive layer **15** comprises 26.9 wt.% aliphatic urethane hexaacrylate, 9.3 % trimethylolpropane triacrylate, 14.3 wt.% hexanediol diacrylate, 2.4 wt.% Omnirad 4265 as crosslinking initiator and 47.1 wt.% of ZrO₂ dispersed in ethanolamine (50 wt.% of ZrO₂ particles in 50 wt.% ETA). Its glass transition temperature is 94°C.

The refractive index after full curing is 1.52 for the resist layer **13** and 1.59 for the adhesive layer **15.** The viscosity is 535.1 cPs for the resist layer **13** and 791.8 cPs for the adhesive layer **15.**

The first and second thermoplastic layers **11, 17** were made of polycarbonate.

An ophthalmic lens was manufactured according to the method of example 1. It shows impossible hand peeling of the structured wafer and no cracking or delamination after the injection overmoulding process.

### Example 5

Another composition usable for the adhesive layer **15** comprises 55 wt.% aliphatic urethane triacrylate, 20 % trimethylolpropane triacrylate, 20 wt.% hexanediol diacrylate and 5 wt.% Omnirad 4265 as crosslinking initiator). Its viscosity is 720.5 cPs.

### Example 6

An ophthalmic laminate **10** was manufactured with the same compositions as example 4 and using a method resembling that of example 1. The only difference is that the resist layer **13** was fully cured before forming the adhesive layer **15.**

Hand peeling of the ophthalmic laminate of example 6 was possible, showing that adhesion between the layers of the ophthalmic laminate of example 4 was significantly higher when the resist layer **13** is softly cured.

### Example 7

In this example, a composition comprising 65 wt.% of Miwon Miramer HR6042 (comprising 60 wt.% of bisflorene difunctiuonal acrylate diluted in 40 wt.% 2-phenylphenoxyethyl acrylate), 15 wt.% Miwon Miramer M140 (2-phenoxyethyl acrylate), 15 wt.% Sartomer SR295 (pentaerythritol tetraacrylate) and 5 wt.% of Omnirad 4265 as the crosslinking initiator, was used for the resist layer **13.**

The composition used in example 3 for the resist layer was used as the first primer layer **12** and the adhesive layer **15.** There were no second primer layer. The first and second thermoplastic layers **11, 17** were made of polycarbonate.

The refractive index after fully curing for the resist layer was 1.60.

An ophthalmic lens was manufactured according to the example 3. Hand peeling of the encapsulated structured wafer was impossible and it presented no cracking and no delamination of the injection-overmoulding process.

### Example 8

An structured wafer **10'** with a first support layer **11** and a resist layer **13** is manufactured with the same stamping process as described in example 1.

In this example, the first support layer **11** is made of polycarbonate, poly(methyl methacrylate), nylon, or other optical quality film material. In some cases, the adhesion of the partially cured resist layer **13** is promoted through corona treatment, plasma treatment or chemical treatment.

The obtained ophthalmic laminate **10** is then shaped (e.g. through thermoforming, hydroforming or blowforming) into the structured wafer **10'** to take on the 3D curved shape of a concave side of a mould **M** (front mould **M1).**

The structured wafer **10'** is inserted against the concave side **M1** and both sides **M1, M2** of the mould were brought together forming a mould cavity **M3.** A molten thermoplastic polymer, such as poly(methyl methacrylate), was injected into the mould cavity **M3** to overmould an ophthalmic substrate **20** onto the structured wafer **10',** thus form the ophthalmic lens **1**.

### Example 9

A structured wafer **10'** with a first support layer **11** and a resist layer **13** is manufactured with the same stamping process as described in example 1.

In this example, the adhesion of the partially cured resist layer **13** is promoted through corona treatment, plasma treatment or chemical treatment. In some cases, the adhesion of the first support layer **11** on the opposite side is also promoted through the same or different method.

The obtained ophthalmic laminate **10** is then shaped (e.g. through thermoforming, hydroforming or blowforming) into the structured wafer **10'** to take on the 3D curved shape of a concave side of a mould **M** (front mould **M1).**

The structured wafer **10'** is inserted between the concave side **M1** and the convex side **M2** of the mould which were brought together forming a mould cavity **M3.** Once the mould **M** assembled, the convex side of the structured wafer **10'** is less than 1 mm away from the inner surface of the concave side of the mould (or front mould **M1**). The mould cavity **M3** is thus split between a front cavity between the concave side **M1** and the structured wafer **10'** and a rear cavity between this latter and the convex side **M2** of the mould.

A thermoset curing material was injected into the mould cavity **M3** to mould an ophthalmic substrate **20** onto the structured wafer **10',** thus form the ophthalmic lens **1.**

### Example 10

This example makes use of an structured wafer **10'** with a first support layer **11,** a resist layer **13,** and a planar levelling layer **15**. The resist layer **13** is formed on the first support layer **11** in the same manner as described in example 1. The planar levelling layer **15** is then coated onto the resist layer **13.** In some cases, the levelling layer **15** comprises refractive index shifting nanoparticles. In some cases, the adhesion of the levelling layer **15** is promoted through corona treatment, plasma treatment or chemical treatment.

The obtained ophthalmic laminate **10** is then shaped (e.g. through thermoforming, hydroforming or blowforming) into the structured wafer **10'** to take on the 3D curved shape of a concave side of a mould **M** (front mould **M1**).

In one variant, the manufacturing of an ophthalmic lens is carried out in the same manner as described in Example 9. Here, the levelling layer **15** increases the otherwise difference in refractive index between the cured thermoset casting material and the resist layer **13**. It also improves adhesion with the cured thermoset casting material.

In another variant, the manufacturing of an ophthalmic lens is carried out in the same manner as described in Example 9. The levelling layer **15** and micro or nanostructures **131** are on the convex surface of laminate **10** and is facing the concave mould M1. Here, the levelling layer changes the otherwise difference in refractive index between the resist layer **13** and air, protects the micro or nanostructure **131** from abrasion, and forms a level exterior surface for hard coating, anti-reflective coating, photochromic coating, etc. without the surface coating altering the contours and functionality of the micro or nanostructures **131.**

In another variant, the manufacturing of an ophthalmic lens is carried out in the same manner as described in Example 8. Here, the levelling layer **15** increases the otherwise difference in refractive index between the thermoplastic injection moulding material and the resist layer **13.** It also improves adhesion with the thermoplastic material and the protection of the micro or nanostructures **131.**

In another variant, the manufacturing of an ophthalmic lens is carried out in the same manner as described in Example 8. The levelling layer **15** and micro or nanostructures **131** are on the convex surface of laminate 10' and is facing the concave mould M1. Here, the levelling layer changes the otherwise difference in refractive index between the resist layer **13** and air, protects of the micro or nanostructure **131** from abrasion, and forms a level exterior surface for hard coating, anti-reflective coating, photochromic coating, etc. without the surface coatings altering the contours and functionality of the micro or nanostructures **131.**

## Claims

1. A method of manufacturing an ophthalmic laminate (10) having:
- a first support layer (11, 12);
- a resist layer (13) having micro or nanostructures (14) at a surface opposite the first support layer;
the method comprising:
- forming on a first support layer (11, 12), a partially cured resist layer (132) with a surface having micro or nanostructures;
wherein forming a partially cured resist layer comprises:
- depositing a resist composition (4) onto the first support layer to form a resist layer (41);
- imprinting the micro or nanostructures (131) onto the resist layer by applying onto the resist layer a stamp (5) provided with a negative image (51) of the micro or nanostructures and partially curing the resist layer until it is no longer tacky but acrylate bonds are still present therein; and
- removing the stamp.

2. The method of claim 1, wherein depositing the resist composition onto the first support layer is carried out through a precision coating technique, such as spin-coating, wire-wound Meyer bar coating, knife coating, roll coating, gravure roller coating, or slot-die coating the resist composition onto the first support layer.

3. The method of claim 2, wherein depositing the resist composition is through slot-die coating, and wherein the stamp is a stamping drum (5, 51); and wherein curing is carried out through the first support layer or the stamping drum.

4. The method of any one of claim 1 to 3, further comprising prior to forming the resist layer on the first support layer, activating the surface of the first support layer.

5. The method of any one of claims 1 to 4, wherein the first support layer is a first thermoplastic layer (11), and wherein the resist composition comprises a crosslinking initiator and a mixture of polymerizable monomers or oligomers;
wherein the mixture comprises:
20-80 wt.% urethane triacrylate or urethane hexaacrylate,
3-30 wt.% triacrylate which is different from a urethane triacrylate and
3-30 wt.%, diacrylate;
wherein the weight percentage are based on the total weight of the polymerizable monomers or oligomers contained in the mixture.

6. The method of any one of claims 1 to 4, wherein the first support layer is a first thermoplastic layer (11), and wherein the resist composition is chosen from:
- formulation F1 comprising:
20 to 80 phm lower refractive index urethane acrylate(s);
10 to 50 phm mono or di-functional acrylate(s) different from lower refractive index urethane acrylates;
0 to 50 phm tri or higher functional acrylate(s) different from lower refractive index urethane acrylates; and
1 to 10 phm photoinitiator;
- formulation F2 comprising:
20 to 80 phm higher refractive index urethane acrylate(s);
10 to 50 phm mono or di-functional acrylate(s) different from lower refractive index urethane acrylates;
0 to 50 phm tri or higher functional acrylate(s) different from lower refractive index urethane acrylates;
0 to 60 phm aromatic acrylate(s); and
1 to 10 phm photoinitiator;
- formulation F3 comprising:
20 to 80 phm 9,9-bis(4-acryloyloxyethoxyphenyl)fluorene;
0 to 30 phm tri or higher functional acrylate(s) different from lower refractive index urethane acrylates;
0 to 60 phm aromatic acrylate(s); and
1 to 10 phm photoinitiator;
- formulation F4 comprising:
0 to 70 phm 9,9-bis(4-acryloyloxyethoxyphenyl)fluorene;
0 to 70 phm aromatic acrylate(s);
30 to 100 phm brominated or chlorinated acrylate(s); and
1 to 10 wt.% photoinitiator;
- formulation F5 comprising:
0 to 50 phm lower refractive index urethane acrylate(s);
0 to 70 phm mono or di-functional acrylate(s) different from lower refractive index urethane acrylates;
0 to 70 phm tri or higher functional acrylate(s) different from lower refractive index urethane acrylates;
30 to 100 phm fluorinated acrylate(s); and
1 to 10 phm photoinitiator;
with optionally 20 to 60 wt.% of refractive index increasing nanoparticles.

7. The method of any one of claims 1 to 4, wherein the first support layer is a first primer layer (12) made from depositing onto a first thermoplastic layer (11), a composition comprising a crosslinking initiator and a mixture of polymerizable monomers or oligomers;
wherein the mixture comprises:
20-80 wt.% urethane triacrylate or urethane hexaacrylate,
3-30 wt.% triacrylate which is different from a urethane triacrylate and
3-30 wt.% diacrylate;
wherein the weight percentage are based on the total weight of the polymerizable monomers or oligomers contained in the mixture.

8. The method of any one of claims 1 to 4, wherein the first support layer is a first primer layer (12) made from depositing onto a first thermoplastic layer (11), the formulation F1 or formulation F2 as defined in claim 6.

9. The method of claim 5 or claim 7, wherein the mixture comprises:
50-70 wt.% urethane hexaacrylate,
15-25 wt.% triacrylate which is different from a urethane triacrylate, and
15-25 wt.% diacrylate;
wherein the weight percentage are based on the total weight of the polymerizable monomers or oligomers contained in the mixture.

10. The method of any one of claims 1 to 9, further comprising, providing a second support layer and a levelling layer between the resist layer and the second support layer.

11. The method of claim 10, further comprising prior to providing the second support layer and the levelling layer, activating the surface of the second support layer.

12. The method of claim 10 or claim 11, wherein providing an levelling layer comprises:
- spin-coating, wire-wound Meyer bar coating, knife coating, roll coating, gravure roller coating, or slot-die coating a levelling composition onto the second support layer to form a levelling film thereon;
- depositing the levelling composition onto the partially cured resist layer;
- bringing the levelling film in contact with the levelling composition deposited on the partially cured resist layer;
- fully curing the laminate to obtained the ophthalmic laminate.

13. The method of any one of claims 10 to 12, wherein the second support layer is a thermoplastic layer (17).

14. The method of any one of claims 10 to 12, wherein the second support layer is a second primer layer (16) made from depositing onto a second thermoplastic layer (17), a composition comprising a crosslinking initiator and a mixture of polymerizable monomers or oligomers;
wherein the mixture comprises:
5-60 wt.% urethane triacrylate or urethane hexaacrylate,
3-30 wt.% triacrylate which is different from a urethane triacrylate and
3-30 wt.% diacrylate;
wherein the weight percentage are based on the total weight of the polymerizable monomers or oligomers contained in the mixture.

15. The method of any one of claims 10 to 12, wherein the second support layer is a second primer layer (16) made from depositing onto a second thermoplastic layer (17), the formulation F1 or formulation F2 as defined in claim 6.

16. A method of manufacturing an ophthalmic lens, comprising:
- providing an ophthalmic laminate with a first support layer (11, 12) and a resist layer (13) having micro or nanostructures (14) at a surface opposite the first support layer; and
- joining a substrate to the ophthalmic laminate;
wherein providing the ophthalmic laminate is according to the method of manufacturing an ophthalmic laminate of any one of claims 1 to 12.

17. The method of claim 16, wherein:
- the mould comprises a convex die and a concave die; and
- placing the ophthalmic laminate comprises placing the ophthalmic laminate against the concave die or the convex die.

18. An ophthalmic laminate (10) comprising, stacked to one another in the following order:
- a first thermoplastic layer (11),
- a resist layer (13),
- an adhesive layer (15) and
- a second thermoplastic layer (17),
wherein the resist layer and the adhesive layer together form micro or nanostructures (14) at their interface,
wherein the resist layer is made from a resist composition comprising a crosslinking initiator and a mixture of polymerizable monomers or oligomers;
wherein the mixture comprises:
5-60 wt.% urethane triacrylate or urethane hexaacrylate,
3-30 wt.% triacrylate which is different from a urethane triacrylate and
3-30 wt.% diacrylate;
wherein the weight percentage are based on the total weight of the polymerizable monomers or oligomers contained in the mixture; or
the mixture is chosen from formulation F1 to F5 defined in claim 6.

19. An ophthalmic laminate (10) comprising, stacked to one another in the following order:
- a first thermoplastic layer (11),
- a resist layer (13),
- an adhesive layer (15), and
- a second thermoplastic layer (17),
wherein the ophthalmic laminate further comprises a primer layer (12, 16) between the first thermoplastic layer and the resist layer, or between the adhesive layer and the second thermoplastic layer;
wherein the primer layer is made of a primer composition comprising a crosslinking initiator and a mixture of polymerizable monomers or oligomers;
wherein the mixture comprises:
5-60 wt.% urethane triacrylate or urethane hexaacrylate,
3-30 wt.% triacrylate which is different from a urethane triacrylate and
3-30 wt.% diacrylate;
wherein the weight percentage are based on the total weight of the polymerizable monomers or oligomers contained in the mixture; or
the mixture is chosen from formulation F1 and formation F2 defined in claim 6.
